# EUROPÄISCHE PATENTSCHRIFT

(11) **EP 2 235 978 B1**
(45) Veröffentlichungstag und Bekanntmachung des Hinweises auf die Patenterteilung: **11.01.2017**
(21) Anmeldenummer: 08871826.7
(22) Anmeldetag: 07.11.2008
(51) Int. Cl.: H04W 12/06, H04W 4/00, H04L 29/06

(54) **VERFAHREN ZUR VERWALTUNG DER AUTORISIERUNG VON MOBILTELEFONEN MIT UND OHNE SIM-KARTE**
METHOD FOR ADMINISTERING THE AUTHORIZATION OF MOBILE TELEPHONES WITH AND WITHOUT A SIM CARD
PROCÉDÉ POUR GÉRER L'AUTORISATION D'ACCÈS RELATIVE À DES TÉLÉPHONES MOBILES AVEC ET SANS CARTE SIM

(30) Priorität: 31.01.2008 DE 102008007085
(43) Veröffentlichungstag der Anmeldung: 06.10.2010
(73) Patentinhaber: Deutsche Telekom AG, 53113 Bonn (DE)
(72) Erfinder: KURZ, Michael, A-1230 Wien (AT)
(74) Vertreter: Cohausz Hannig Borkowski Wißgott
(86) Internationale Anmeldenummer: PCT/EP2008/009415
(87) Internationale Veröffentlichungsnummer: WO 2009/095048

(56) Entgegenhaltungen:
- WO-A-2005/096651
- US-A1- 2006 232 437
- US-A1- 2006 293 028
- GYORGY KALMAN ET AL: "SIM as Secure Key Storage in Communication Networks" WIRELESS AND MOBILE COMMUNICATIONS, 2007. ICWMC '07. THIRD INTERN ATIONAL CONFERENCE ON, IEEE, PI, 1. März 2007 (2007-03-01), Seiten 55-55, XP031065976 ISBN: 978-0-7695-2796-3

## Beschreibung

Die vorliegende Erfindung betrifft ein Verfahren zur Verwaltung der Autorisierung eines Mobiltelefons oder mehrerer Mobiltelefone gegenüber einem Mobilfunknetz, wobei das die Mobiltelefon für die Nahfeldkommunikation eingerichtet ist, eine Mobilfunkkarte aufweisen kann, und seine Autorisierung gegenüber dem Mobilfunknetz (8) durch ein externes Gerät (1) erfolgt, in dem es registriert ist und in welchem zumindest eine Mobilfunkkarte (10) und eine Einrichtung (3) zur Nahfeldkommunikation (7) mit dem Mobiltelefon (5) vorgesehen ist, wobei zur Autorisierung eine Nahfeldkommunikation (7) zwischen dem externen Gerät (1) und dem Mobiltelefon (5) erfolgt und ein Verbindungsaufbau zum Mobilfunknetz (8) nach erfolgreicher Autorisierung vom externen Gerät (5) zugelassen wird. Weiterhin betrifft die Erfindung ein System zur Anwendung des Verfahrens.

Zur Authentifizierung von Mobiltelefonen gegenüber dem Mobilfunknetz sowie zu deren Autorisierung zum Erhalt eines Zugangs zum Mobilfunknetz, werden bei Mobiltelefonen Identifikationsmodule in Form von Mobilfunkkarten verwendet. Derartige Identifikationsmodule sind beispielsweise SIM-Karte (Subscriber Identification Module) oder USIM-Karte (Universal Subscriber Identification Module). Häufig kommt es vor, dass ein Mobilfunkteilnehmer mehrere mobile Endgeräte für den Mobilfunk zur selben Zeit verwenden möchte. Dies ist beispielsweise der Fall, wenn der Mobilfunkteilnehmer ein autarkes Mobiltelefon sowie ein in seinem Kraftfahrzeug integriertes Mobiltelefon besitzt, wobei der Teilnehmer zu jeder Zeit die volle Funktionalität beider Mobiltelefone nutzen möchte. In diesem Fall ist es notwendig, dass in jedes Gerät ein Identifikationsmodul eingesetzt wird, welchem dieselbe Mobilfunkteilnehmernummer (MSISDN, Mobile Subscriber Integrated Services Digital Network Number) zugeordnet ist.

Darüber hinaus kommt es nicht selten vor, dass Personen mehr als ein Mobiltelefon mit unterschiedlichen Identifikationsmodulen mit sich führen, beispielsweise ein privates und berufliches Mobiltelefon, die unter verschiedenen Rufnummern erreichbar sind. Für diesen Fall sind Mobilfunkendgeräte bekannt, die eine sogenannte Dual-SIM-Kartenlösung aufweisen und die zumindest die Verwendung von zwei SIM-Karten gleichzeitig in einem Mobiltelefon ermöglichen. Diese Endgeräte sind jedoch selten und unverhältnismäßig teuer.

In der Praxis kommt es auch häufig vor, dass eine SIM-Karte zwischen zwei oder sogar mehreren Endgeräten gewechselt wird. Dies ist jedoch äußerst umständlich, da hierzu in der Regel ein Entfernen der Gehäuseabdeckung und des Akkumulators des Mobiltelefons notwendig ist. Da die Halterung der SIM-Karte für einen häufigen Austausch nicht konzipiert ist, kommt es zu mechanischen Schäden und Kontaktproblemen am Identifikationsmodul oder der SIM-Kartenhalterung.

Die Veröffentlichung US 2006/0293028 A1 offenbart ein Verfahren zum Verwalten einer netzwerkgebundenen Autorisierung, welches unter anderen die Autorisierung von Mobilfunktelefonen ohne eigene SIM-Karte in einem Mobilfunknetz ermöglicht. Dabei erfolgt die Autorisierung mithilfe einer Nahfeldkommunikation zwischen dem jeweiligen Mobilfunkgerät und einem über kabellose Kommunikation, wie beispielsweise Bluetooth erreichbaren Autorisierungsverwaltungsmodul, welches seinerseits mit einer SIM-Karte verbunden ist. Die Sende- und Empfangseinrichtung kann in dem Mobilfunkgerät angeordnet sein, sodass das Mobilfunkgerät nach erfolgter Autorisation durch das Autorisierungsverwaltungsmodul selbst eine Mobilfunkverbindung eingehen kann. Eine Verwendung des Verfahrens für Mobilfunkgeräte mit SIM-Karte ist in der US2006/0293028 A1 hingegen nicht vorgesehen. Daher müssen bei der Verwendung dieses Verfahrens vorhandene SIM-Karten aus den Mobilfunkgeräten vorab entfernt werden.

Es ist daher Aufgabe der Erfindung eine einfache und komfortable Alternative für das manuelle Wechseln der Mobilfunkkarte bereitzustellen, um durch das Wechseln bedingten Schäden an der Mobilfunkkarte oder am Mobiltelefon vorzubeugen, und gleichzeitig mehrere Mobilfunkendgeräte unter Verwendung lediglich einer Mobilfunkkarte nutzbar zu machen, so dass auf die Verwendung einzelner Mobilfunkkarten in jedem Mobilfunkendgerät verzichtet werden kann.

Diese Aufgabe wird erfindungsgemäß durch das Verfahren mit den Merkmalen des Anspruchs 1 sowie mit dem System zur Durchführung des Verfahrens nach Anspruch 10 gelöst. Vorteilhafte Ausgestaltungen der Erfindungen sind in den Unteransprüchen enthalten sowie in der nachfolgenden Beschreibung erläutert.

Besonders vorteilhaft ist ein Verfahren zur Verwaltung der Autorisierung mindestens eines Mobiltelefons gegenüber einem Mobilfunknetz, wobei das Mobiltelefon für die Nahfeldkommunikation eingerichtet ist, eine Mobilfunkkarte aufweisen kann, und seine Autorisierung gegenüber dem Mobilfunknetz durch ein externes Gerät erfolgt, in dem es registriert ist und in welchem zumindest eine Mobilfunkkarte und eine Einrichtung zur Nahfeldkommunikation mit dem Mobiltelefon vorgesehen ist, wobei zur Autorisierung eine Nahfeldkommunikation zwischen dem externen Gerät und dem Mobiltelefon erfolgt und ein Verbindungsaufbau nach erfolgreicher Autorisierung vom externen Gerät zugelassen wird, wobei die Autorisierung die Überprüfung umfasst, ob das Mobiltelefon (5) bei dem externen Gerät (1) registriert und daher berechtigt ist, mit diesem zu kommunizieren, und ob eine Einbuchung des Mobiltelefons (5) im Mobilfunknetzwerk (8) erfolgreich erfolgte, wobei die Autorisierung des Mobiltelefons (5) durch das externe Gerät (1) sowohl im Falle des Fehlens einer Mobilfunkkarte (6) in dem Mobiltelefon (5) erfolgt als auch, wenn das zu autorisierende Mobiltelefon (5) eine Mobilfunkkarte (6) aufweist, wobei das Mobiltelefon (5) bei vorhandener Mobilfunkkarte (6) derart konfiguriert ist, dass es im Falle eines Kommunikationsereignisses eine Autorisierung durch das externe Gerät (1) erwartet.

Erfindungsgemäß wird damit der Autorisierungsprozess eines oder mehrerer Mobiltelefone gegenüber dem Mobilfunknetz von dem externen Gerät verwaltet, welches als handliches kleines Gerät ausgebildet ist und vom Anwender mitgeführt werden kann.

Die vorgeschlagene Lösung bietet damit die Möglichkeit, mittels eines zusätzlichen externen Gerätes, welches das für die Autorisation des oder der Mobiltelefone gegenüber dem Mobilfunknetz notwendige Identifikationsmodul insbesondere eine Mobilfunkkarte in Gestalt einer SIM- oder USIM-Karte enthält, dieses eine oder eines der mehreren Mobilfunkgeräte gegenüber dem Mobilfunknetz zu verwalten, insbesondere deren Autorisierung einschließlich Authentifikation gegenüber dem Mobilfunknetz zu übernehmen. Zu diesem Zweck weisen sowohl das externe Gerät als auch das/ die Mobiltelefon(e) Einrichtungen für die drahtlose Nahfeldkommunikation auf, mittels welcher Autorisationsdaten zwischen den Geräten ausgetauscht werden können.

Vorzugsweise erfolgt die Nahfeldkommunikation zwischen Mobiltelefon und externem Gerät mittels RFID (Radio Frequency Identification). Diese Kommunikationstechnologie hat den Vorteil, dass sie besonders preiswert zu realisieren ist, da RFID-Elemente und RFID-Lesegeräte bereits Massenmarktprodukte auf niedrigem Preisniveau sind. Weiterhin hat diese Technologie den Vorteil, dass sie leicht auf bzw. zusammen mit einer Mobilfunkkarte in einem Chip integriert werden kann. Alternativ oder in Kombination kann auch eine Nahfeldkommunikation über Bluetooth oder Infrarot erfolgen, wobei Mobiltelefon und externes Gerät in diesem Fall über entsprechende Kommunikationseinrichtungen verfügen.

Existierende RFID Technologien basieren derzeit auf Standards wie z.B. ISO 14443A, ISO 14443B oder ISO 14443C, welche zur Authentifizierung für z.B. elektronische Zutrittssysteme, Verkaufsautomaten, etc. verwendet werden. Bei RFIDs wird zwischen aktiven und passiven Einheiten unterschieden. Aktive RFIDs benötigen gegenüber passiven RFIDs eine eigene Energieversorgung. Erfindungsgemäß ist es daher besonders vorteilhaft, das externe Gerät mit einer passiven RFID-Einheit auszurüsten und in dem Mobiltelefon eine aktive RFID-Einheit vorzusehen. Das externe Gerät kann in diesem Fall vollständig ohne Energieversorgung auskommen, da dessen passive RFID-Einheit ihre notwendige Energie aus dem elektromagnetischen Kommunikationsnahfeld bezieht. Die Gefahr eines Ausfalls des externen Geräts in Folge zu geringer Batteriekapazität kann somit vermieden werden.

In einer vorteilhaften Ausführung der Erfindung können das externe Gerät und das Mobiltelefon bei der Nahfeldkommunikation als Server-Client kommunizieren, wobei das externe Gerät einen Server und das Mobiltelefon einen Client darstellt.

Vorzugsweise kann den Mobiltelefonen und dem externen Gerät jeweils eine Kennung zugeordnet werden, mit welcher sie von dem externen Gerät identifiziert werden. Auf diese Weise ist eine Unterscheidbarkeit der Mobiltelefone und direktes Adressieren eines Autorisationsdatenaustauschs an ein bestimmtes Mobiltelefon möglich, wobei zusätzlich ein fremder Zugriff unberechtigter Geräte vermieden wird. Eine Kennung kann dabei vorzugsweise einer RFID-Einheit zugeordnet sein.

Erfindungsgemäß wird das eine Mobiltelefon bzw. werden die Mobiltelefone vor dessen/deren Autorisierung in dem externen Gerät registriert. Auf diese Weise kann die Autorisierung des entsprechenden Mobiltelefons im Falle eines Kommunikationswunsches desselben oder im Falles eines eingehenden Kommunikationsereignisses wie ein Anruf oder eine elektronische Kurznachricht ohne Verzögerung erfolgen, wobei beispielsweise im Falle eines Kommunikationswunsches eines Mobiltelefons dessen Kennung über das RFID-Nahfeld zu dem externen Gerät übertragen und dort mit dem/den registrierten Eintrag/ Einträgen verglichen wird und eine Autorisierung des Mobiltelefons dann erfolgt, wenn dessen Kennung mit einer registrierten Kennung übereinstimmt.

Erfindungsgemäß erfolgt die Autorisierung auch dann durch das externe Gerät, wenn das zu autorisierende Mobiltelefon oder die zu autorisierenden Mobiltelefone eine bzw. jeweils eine Mobilfunkkarte, insbesondere eine SIM oder USIM-Karte aufweist/ aufweisen. Existierende Mobiltelefone am Markt können daher auch zukünftig verwendet werden. Das Mobiltelefon kann bzw. die Mobiltelefone können dann derart konfiguriert werden, dass es/ sie im Falle eines Kommunikationsereignisses eine Autorisierung durch das externe Gerät erwartet bzw. erwarten. D.h., dass in dem Mobiltelefon voreingestellt ist, dass die in das externe Gerät eingelegte Mobilfunkkarte gegenüber dem Identifikationsmodul des Mobiltelefons priorisiert ist und das Mobiltelefon im Falle eines Kommunikationsereignisses in Form eines Kommunikationswunsches oder in Form eines eingehenden Anrufs die Autorisierung durch das externe Gerät abwartet. Alternativ kann auch vorgesehen werden, dass die Voreinstellung des priorisierten externen Gerätes durch eine manuelle Einstellung in dem Mobiltelefon vom Mobilfunknutzers zu Beginn oder nachträglich vorgenommen und im Bedarfsfall geändert wird.

Weiterhin kann die Nahfeldkommunikation vorzugsweise verschlüsselt und/ oder passwortgeschützt erfolgen. Damit wird ein hohes Maß an Sicherheit beim Datenaustausch über das Nahfeld gewährleistet.

Bevorzugt kann bei einem Kommunikationswunsch eines registrierten Mobiltelefons oder bei einem eingehenden Kommunikationsereignis eine Überprüfung der Autorisierung des Mobiltelefons und eine Überprüfung auf zumindest eine bestehende aktive Verbindung der registrierten Mobiltelefone erfolgen.

Die Überprüfung der Autorisierung umfasst gemäß der Erfindung die Überprüfung, ob das Mobiltelefon bei dem externen Gerät registriert und daher berechtigt ist, mit diesem zu kommunizieren, sowie ob eine Einbuchung des Mobiltelefons im Mobilfunknetzwerk erfolgreich erfolgte.

Zur Vermeidung von Kollisionen beim Datenaustausch über die Kommunikationsverbindung mit dem Mobilfunknetz ist es weiterhin vorteilhaft, wenn der Aufbau einer Kommunikationsverbindung nur dann erfolgt, wenn kein registriertes Mobiltelefon eine aktive Verbindung unterhält. D.h., dass eine Verbindung über das Mobilfunknetz nur dann aufgebaut werden soll, wenn keines der registrierten Mobiltelefone in ein Telefonat involviert ist. Alternativ kann eine Kommunikationsverbindung jedoch auch dann neben einer bereits bestehenden aktiven Verbindung eines anderen Mobiltelefons aufgebaut werden, wenn das externe Gerät zumindest eine zweite Mobilfunkkarte aufweist, über welche ein weiteres Mobiltelefon gegenüber dem Mobilfunknetz autorisiert werden kann.

Die Erfindung wird nachfolgend anhand von Ausführungsbeispielen und den beigefügten Figuren beschrieben. Es zeigen:
Figur 1: eine schematische Darstellung der Verwaltung der Autorisierung von Mobilfunkendgeräten im Mobilfunknetzwerk nach dem Stand der Technik.
Figur 2: eine schematische Darstellung der erfindungsgemäßen Verwaltung der Autorisierung von Mobilfunkendgeräten im Mobilfunknetzwerk mittels externem Gerät.
Figur 3: Autorisierungsprozess der Mobilfunkendgeräte
Figur 4: Rufaufbau bzw. Rufentgegennahme eines Mobilfunkendgerätes mittels externem Gerät
Figur 5: Mehrfach-SIM-Karten Lösung im externen Gerät

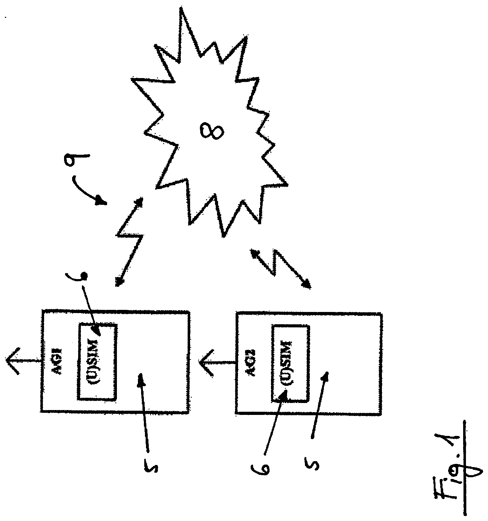

Im Folgenden wird beispielhaft eine Ausführung der erfindungsgemäßen Lösung der Verwaltung der Autorisation eines oder mehrerer Mobilfunkendgeräte gleichzeitig, nachfolgend Anwendergeräte (AG) genannt, gegenüber einem Mobilfunknetz mittels drahtloser Verbindung zu einem externen Gerät (EG) anhand der Figuren 1 bis 5 beschrieben. Als Anwendergeräte werden nachfolgend insbesondere Mobiltelefone verstanden. Das externe Gerät (EG) weist einen Dual-Interface-Chip auf, welcher eine kombinierte RFID/SIM-Einheit oder RFID/USIM-Einheit darstellt, d.h. eine SIM oder USIM-Mobilfunkkarte und eine Radio Frequency Identification (RFID)-Einheit, die mit einem gemeinsamen Interface auf einer Smart Card untergebracht sind.

Figur 1 zeigt den derzeitigen Zustand bei der Autorisierung von Anwendergeräten 5 gegenüber einem Mobilfunknetz 8. Die Anwendergeräte 5 (AG1, AG2) besitzen jeweils eine SIM oder USIM-Karte 6, auf der jeweils eine eindeutige MSISDN enthalten ist, die die Anwendergeräte 5 gegenüber dem Mobilfunknetz 8 authentifizieren. Zum Aufbau einer Kommunikationsverbindung 9 über das Mobilfunknetz 8 müssen sich die Anwendergeräte 5 in das Mobilfunknetz 8 einbuchen, wobei sie sich authentifizieren. Weiterhin erfolgt nach dem Einbuchen eine Autorisierung der Anwendergeräte 5 zur Annahme oder Aufbau einer Kommunikationsverbindung 9, wobei das entsprechende Anwendergerät 5 selbst eine Autorisierungsanfrage an das Mobilfunknetz 8 auf der Grundlage der auf ihren Mobilfunkkarten 6 gespeicherten Daten vornimmt.

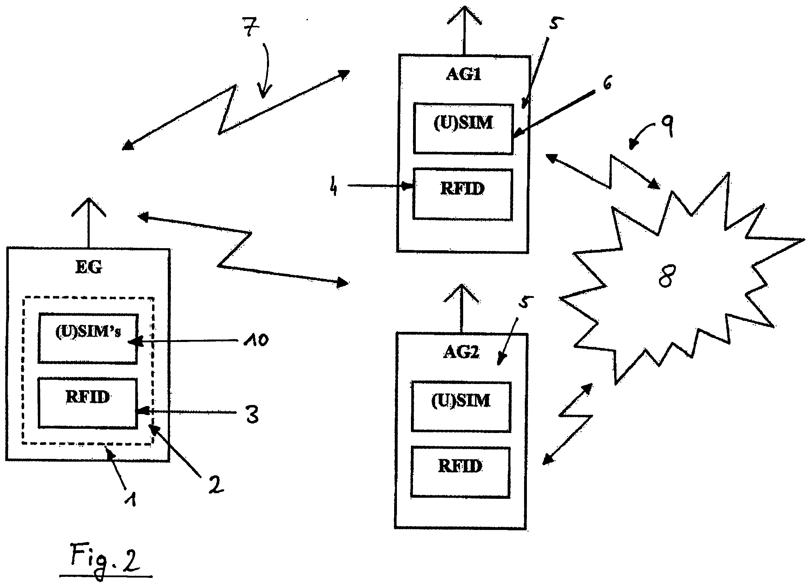

Die vorgeschlagene Lösung gemäß Figur 2 bietet, entgegen der derzeit am Markt erhältlichen Lösungen der eingangs genannten Nachteile, die herausragende Möglichkeit, durch ein zusätzliches externes Gerätes 1 ein oder mehrere mobile Anwendergeräte 5 mittels einer oder mehreren kombinierten RFID/SIM - oder RFID-USIM-Einheit(en) 2 für Mobilfunknetze 8 zu authentifizieren und zu autorisieren. Die kombinierte RFID/Mobilfunkkarte-Einheit 2 weist eine RFID-Einheit 3 und eine Mobilfunkkarte 10, beispielsweise eine SIM oder USIM-Karte auf.

Die erfindungsgemäße Lösung verwendet hierbei nicht die Funktion des Mobilfunkbetreibers durch einfaches Weiterleiten eines Gesprächs, sondern nutz sogenannte Server (EG) - Client (AG) Verbindungen 1:n, d.h. eine Mobilfunkkarte 3 im externen Gerät 1 gegenüber Anwendergeräten der Anzahl n. Ferner können sogar Verbindungen m:n verwaltet werden, d.h. ein oder mehrere Mobilfunkkarten 10 im externen Gerät 1 gegenüber einem oder mehreren Anwendergeräten 5. Als Verbindungsschnittstelle fungiert RFID zwischen dem Server und den Clients, wobei die Autorisierungsdaten oder auch andere Daten bei Bedarf durch die drahtlose Übertragung 7 mittels RFID ausgetauscht werden können. Abhängig vom verwendeten RFID-System (z.B. aktiv/passiv), benötigt das externe Gerät 1 bzw. dessen RFID/Mobilfunkkarte-Einheit(en) 2 im Falle deren Ausführung mir einem passiven RFID-Medium 3 nicht einmal eine eigene Stromversorgung, weil die RFID/Mobilfunkkarte-Einheit(en) 2 aus dem Kommunikationsnahfeld 7 der aktiven RFID Leseeinheit 4 des mobilen Gerätes 5 oder im Falle mehrerer Anwendergeräte 5 aus deren aktiven Leseeinheiten gemeinsam mit Energie versorgt wird bzw. werden.

Die Übertragungsreichweite bei der RFID-Technologie beträgt durchschnittlich unter 0,5 m. Weitere Reichweiten können zwar bei einigen RFID-Technologien durch Unterstützung von Verstärkern erreicht werden, wodurch jedoch der Energieverbrauch dramatisch zunimmt. Wenn anstatt der passiven RFID-Einheit 3 im externen Gerät 1 eine aktive Einheit verwendet wird, steigt die Reichweite wesentlich, durchschnittlich bis auf ca. 10 m, allerdings benötigt das externe Gerät in diesem Fall eine eigene Energieversorgung. Die Größe eines kombinierten SIM/RFID-Elementes 2 oder USIM/RFID-Elementes 2 ist vergleichbar mit der einer bestehenden SIM bzw. USIM Karte (wie z.B. kombinierte RFID-(U)SIM). Demgegenüber benötigen die RFID-Leseeinheiten 4 mehr Platz, können jedoch auch in die relativ kompakten derzeit bestehenden Anwendergeräte 5 integriert werden.

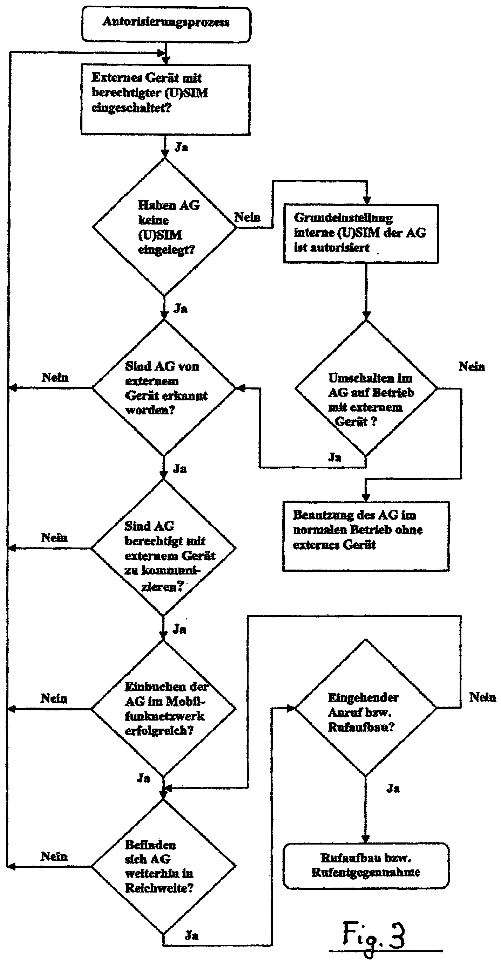

Wahlweise kann ein Anwendergerät 5 auch auf herkömmliche Weise mittels SIM/USIM 6 benutzt werden, d.h. auch ohne externes Gerät 1. Falls das externe Gerät 1 verwendet wird und sich eine SIM/USIM Karte 6 im Endgerät 5 befindet, muss eine eindeutige Authentifizierungsprozedur bzw. ein Autorisierungsprozess definiert werden, welcher in Figur 3 dargestellt ist. Hierbei sind zwei Möglichkeiten realisierbar:
Möglichkeit 1: Die eingelegte SIM/USIM Karte 6 besitzt TOP-Priorität und das externe Gerät 1 eine niedrige.
Möglichkeit 2: Der Autorisierungspfad, der bestimmt, ob externes Gerät 1 oder eingelegte SIM/USIM 6 Vorrang bei der Durchführung der Autorisierung haben, wird manuell durch den Anwender im Anwendergerät 5 konfiguriert, wobei optional durch den Mobilfunkbetreiber Grundeinstellungen möglich sind.

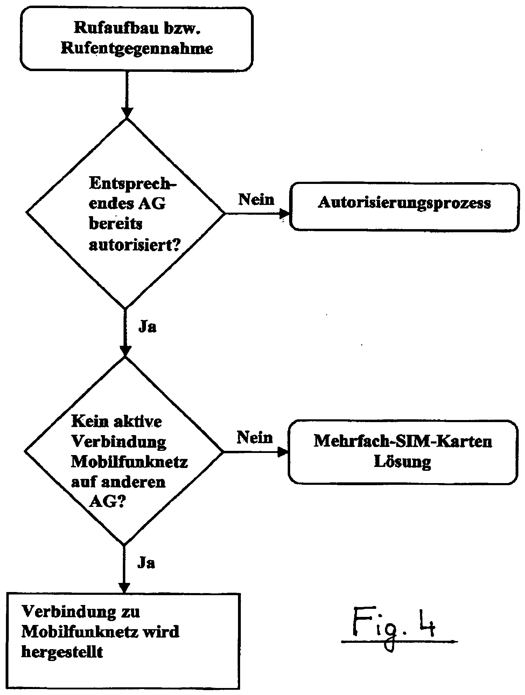

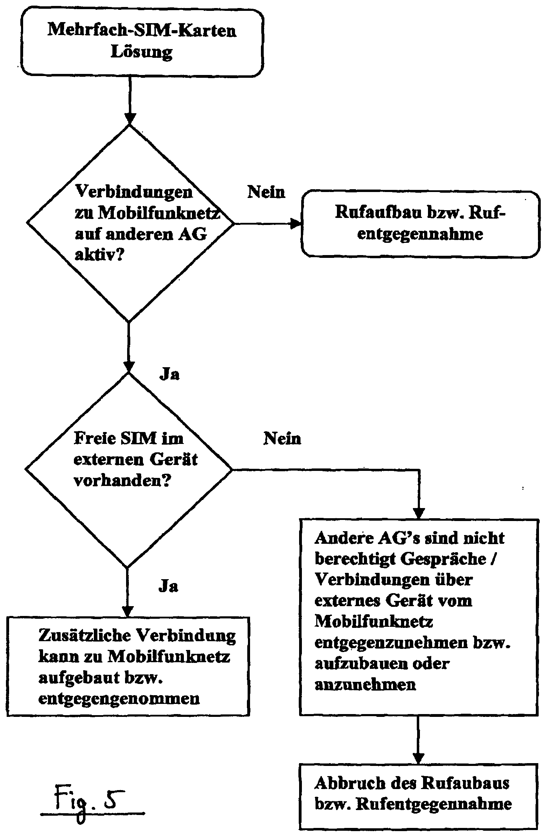

Bezüglich der Autorisierung mittels externem Gerät 1 für mehrere Anwendergeräte 5, mit welchem Gerät 5 der Anwender telefonieren kann, wären folgende Szenarien denkbar:
Anwendungsfall 1: Rufaufbau. Der Rufaufbau erfolgt mit beliebigen Anwendergeräten 5, allerdings immer nur ein Anwendergerät 5 gleichzeitig, siehe Figur 4.
Anwendungsfall 2: Rufentgegennahme. Die Entgegennahme eines Anrufs erfolgt mit beliebigen Anwendergeräten 5, allerdings immer nur ein Anwendergerät 5 gleichzeitig, siehe Figur 4.
Anwendungsfall 3: Mehrere Verbindungen 9 bzw. mehrere SIMs/USIMs gleichzeitig. Dies kann z.B. durch zwei SIMs 10 im externen Gerät 1 erfolgen. Hierbei sind zwei Verbindungen 9 mit dem Anwendergerät 5 zum Mobilfunknetz 8 gleichzeitig möglich. Das verwendete RFID-Medium muss dann allerdings anti-kollisionsfähig sein. Ein Verfahrensablauf zu diesem Szenario ist in Figur 5 dargestellt.

Die Kommunikationsverbindung 7 zwischen dem externen Gerät 1 und den Anwendergeräten 5 erfolgt aus Sicherheitsgründen verschlüsselt oder zumindest passwortgeschützt. Für die Kommunikation sind den einzelnen Geräten 1, 5 eindeutige Kennungen zugeordnet, um ihre Eindeutigkeit sicherzustellen (ebenso wichtig für Anti-Kollision) und um fremde Zugriffe nicht berechtigter Geräte auszuschließen.

Anstatt oder zusätzlich zu der RFID-Verbindung kann auch ein Datenaustausch über Bluetooth oder Infrarot erfolgen, wodurch das Einsatzgebiet der erfindungsgemäßen Autorisierungsverwaltung erhöht wird. Weiterhin kann am Markt existierenden Geräten, die überwiegend Bluetooth- und/ oder Infrarotkommunikation unterstützen, durch eine Nahfeldkommunikation mit Bluetooth oder Infrarot die Funktionalität des erfindungsgemäßen Verfahrens zur Verfügung gestellt werden, indem auch des externe Gerät 1 eine Einrichtung zur Kommunikation via Bluetooth und/ oder Infrarot aufweist.

Der Vorteil für den Anwender ist bei dem erfindungsgemäßen Verfahren, dass seine mobilen Geräte 5, insbesondere Mobiltelefone, auf einfache Weise autorisiert und letztlich zu seinem Mobilfunkbetreiber verbunden werden mit dem weiteren Vorteil, gleichzeitig zusätzliche Funktionen durch Verwendung des RFID-Teils nutzen zu können beispielsweise zur Authentifizierung und Durchführung von bargeldlosem Bezahlen bei Getränkeautomaten, oder Verwendung der RFID-Einheit als Zutrittsmedium bei elektronischen Schließsystemen.

Das externe Gerät kann optional verwendet werden, um so ständiges SIM/USIM-Kartenwechseln zu vermeiden, wobei die Halterung der SIM/USIM für einen ständigen Austausch auch nicht konzipiert wurde, denn die SIM-Halterung liegt meist unter dem Akkumulator und ist mechanisch nicht entsprechend konstruiert.

Der Vorteil für den Mobilfunkbetreiber ist die Verwendung derselben Kontrollprozeduren und Autorisierungsprozessen wie bei bestehenden SIM/USIM-Karten.

## Patentansprüche

1. Verfahren zur Verwaltung der Autorisierung mindestens eines Mobiltelefons (5) gegenüber einem Mobilfunknetz (8), wobei das Mobiltelefon (5) für eine Nahfeldkommunikation (7) eingerichtet ist, eine Mobilfunkkarte aufweisen kann, und seine Autorisierung gegenüber dem Mobilfunknetz (8) durch ein externes Gerät (1) erfolgt, in dem es registriert ist und in welchem zumindest eine Mobilfunkkarte (10) und eine Einrichtung (3) zur Nahfeldkommunikation (7) mit dem Mobiltelefon (5) vorgesehen ist, wobei zur Autorisierung eine Nahfeldkommunikation (7) zwischen dem externen Gerät (1) und dem Mobiltelefon (5) erfolgt und ein Verbindungsaufbau zum Mobilfunknetz (8) nach erfolgreicher Autorisierung vom externen Gerät (5) zugelassen wird, **dadurch gekennzeichnet, dass** die Autorisierung die Überprüfung umfasst, ob das Mobiltelefon (5) bei dem externen Gerät (1) registriert und daher berechtigt ist, mit diesem zu kommunizieren, und ob eine Einbuchung des Mobiltelefons (5) im Mobilfunknetzwerk (8) erfolgreich erfolgte, wobei die Autorisierung des Mobiltelefons (5) durch das externe Gerät (1) sowohl im Falle des Fehlens einer Mobilfunkkarte (6) in dem Mobiltelefon (5) erfolgt als auch, wenn das zu autorisierende Mobiltelefon (5) eine Mobilfunkkarte (6) aufweist, wobei das Mobiltelefon (5) bei vorhandener Mobilfunkkarte (6) derart konfiguriert ist, dass es im Falle eines Kommunikationsereignisses eine Autorisierung durch das externe Gerät (1) erwartet.

2. Verfahren nach Anspruch 1, **dadurch gekennzeichnet, dass** die Nahfeldkommunikation (7) über RFID erfolgt.

3. Verfahren nach Anspruch 1 oder 2, **dadurch gekennzeichnet, dass** in dem externen Gerät (1) eine passive RFID-Einheit (3) und in dem Mobiltelefon (5) eine aktive RFID-Einheit (4) für die Nahfeldkommunikation (7) vorgesehen ist.

4. Verfahren nach einem der vorherigen Ansprüche, **dadurch gekennzeichnet, dass** bei der Nahfeldkommunikation (7) das externe Gerät (1) ein Server und das Mobiltelefon (5) ein Client bildet.

5. Verfahren nach einem der vorherigen Ansprüche, **dadurch gekennzeichnet, dass** dem Mobiltelefon (5) eine Kennung zugeordnet wird, mit welcher es von dem externen Gerät (1) identifiziert wird.

6. Verfahren nach einem der vorherigen Ansprüche, **dadurch gekennzeichnet, dass** die Nahfeldkommunikation (7) verschlüsselt und/ oder passwortgeschützt erfolgt.

7. Verfahren nach einem der vorherigen Ansprüche, **dadurch gekennzeichnet, dass** das externe Gerät (1) die Autorisierung zumindest zweier Mobiltelefone (5) verwaltet, welche bei dem externen Gerät (1) registriert werden.

8. Verfahren nach Anspruch 7, **dadurch gekennzeichnet, dass** bei einem Kommunikationswunsch eines Mobiltelefons (5) oder bei einem eingehenden Kommunikationsereignis eine Überprüfung der Autorisierung des entsprechenden Mobiltelefons (5) und eine Überprüfung auf bestehende aktive Verbindungen der registrierten Mobiltelefone (5) erfolgt.

9. Verfahren nach Anspruch 8, **dadurch gekennzeichnet, dass** der Aufbau einer Kommunikationsverbindung (9) nur dann erfolgt, wenn kein registriertes Mobiltelefon (5) bei Verwendung von nur einer Mobilfunkkarte (10) im externen Gerät (1) eine aktive Verbindung unterhält oder wenn bei mehreren registrierten Mobiltelefonen (5) bei Verwendung von mehreren Mobilfunkkarten (10) eine weitere aktive Verbindung möglich ist.

10. System zur Durchführung des Verfahrens nach einem der Ansprüche 1 bis 9, zumindest umfassend ein Mobiltelefon (5) für die Kommunikation über ein Mobilfunknetz (8) mit einer Nahfeldkommunikationseinheit (4), und ein externes Gerät (1) mit einer Nahfeldkommunikationseinheit (3) und einer oder mehrerer Mobilfunkkarte(n) (10), wobei die Nahfeldkommunikationseinheiten (3, 4) von Mobiltelefon (5) und externem Gerät (1) zur Übertragung und Empfang von Autorisierungsdaten eingerichtet sind.

11. System nach Anspruch 10, **dadurch gekennzeichnet, dass** die Nahfeldkommunikationseinheit (3) in dem externen Gerät (1) eine passive RFID-Einheit und die Nahfeldkommunikationseinheit (4) in dem Mobiltelefon (5) eine aktive RFID-Einheit ist.

## Claims

1. Method for managing the authorization of at least one mobile telephone (5) for a mobile radio network (8), wherein the mobile telephone (5) is set up for a near field communication (7), can have a mobile radio card, and its authorization for the mobile radio network (8) is provided by an external device (1) in which it is recorded and in which at least one mobile radio card (10) and a device (3) for near field communication (7) with the mobile telephone (5) are provided, wherein authorization involves a near field communication (7) between the external device (1) and the mobile telephone (5) being effected and a connection setup to the mobile radio network (8) being permitted following successful authorization by the external device (5), **characterized in that** the authorization comprises the check to determine whether the mobile telephone (5) is recorded on the external device (1) and is therefore entitled to communicate therewith, and whether a registration of the mobile telephone (5) in the mobile radio network (8) was effected successfully, wherein the authorization of the mobile telephone (5) by the external device (1) is effected both in the absence of a mobile radio card (6) in the mobile telephone (5) and when the mobile telephone (5) to be authorized has a mobile radio card (6), the mobile telephone (5) being configured, when a mobile radio card (6) is present, such that it expects an authorization by the external device (1) when there is a communication event.

2. Method according to Claim 1, **characterized in that** the near field communication (7) is effected via RFID.

3. Method according to Claim 1 or 2, **characterized in that** the external device (1) has a passive RFID unit (3) provided in it and the mobile telephone (5) has an active RFID unit (4) provided in it for the near field communication (7).

4. Method according to one of the preceding claims, **characterized in that** the near field communication (7) entails the external device (1) forming a server and the mobile telephone (5) forming a client.

5. Method according to one of the preceding claims, **characterized in that** the mobile telephone (5) is allocated an identifier with which it is identified by the external device (1).

6. Method according to one of the preceding claims, **characterized in that** the near field communication (7) is effected in encrypted and/or password-protected form.

7. Method according to one of the preceding claims, **characterized in that** the external device (1) manages the authorization of at least two mobile telephones (5) that are recorded on the external device (1).

8. Method according to Claim 7, **characterized in that** a communication request from a mobile telephone (5) or an incoming communication event entails a check on the authorization of the relevant mobile telephone (5) and a check for existing active connections of the recorded mobile telephone (5) being effected.

9. Method according to Claim 8, **characterized in that** a communication link (9) is set up only if no recorded mobile telephone (5) maintains an active connection when just one mobile radio card (10) is used in the external device (1) or if a further active connection is possible for multiple recorded mobile telephones (5) when multiple mobile radio cards (10) are used.

10. System for carrying out a method according to one of Claims 1 to 9, at least comprising a mobile telephone (5) for the communication via a radio network (8) with a near field communication unit (4), and an external device (1) having a near field communication unit (3) and one or more mobile radio card(s) (10), wherein the near field communication units (3, 4) of the mobile telephone (5) and the external device (1) are set up to transmit and receive authorization data.

11. System according to Claim 10, **characterized in that** the near field communication unit (3) in the external device (1) is a passive RFID unit and the near field communication unit(4) in the mobile telephone (5) is an active RFID unit.

## Revendications

1. Procédé d'administration de l'autorisation d'au moins un téléphone mobile (5) par rapport à un réseau radio mobile (8), dans lequel le téléphone mobile (5) est conçu pour effectuer une communication en champ proche (7), peut comporter une carte radio mobile et son autorisation par rapport au réseau radio mobile (8) est effectuée par un appareil externe (1) sur lequel il est enregistré et dans lequel il est prévu au moins une carte radio mobile (10) et un dispositif (3) destiné à effectuer une communication en champ proche (7) avec le téléphone mobile (5), dans lequel une communication en champ proche (7) est effectuée pour l'autorisation entre l'appareil externe (1) et le téléphone mobile (5) et l'établissement d'une liaison au réseau radio mobile (8) est autorisée après que l'autorisation par l'appareil externe (5) a réussi, **caractérisé en ce que** l'autorisation comprend une vérification du fait de savoir si le téléphone mobile (5) est enregistré sur l'appareil externe (1) et s'il est ainsi autorisé à communiquer avec celui-ci, et si une inscription du téléphone mobile (5) sur le réseau radio mobile (8) a réussi, dans lequel l'autorisation du téléphone mobile (5) est effectuée par l'appareil mobile (1) aussi bien lorsque le téléphone mobile (5) ne comporte pas de carte radio mobile (6) que lorsque le téléphone mobile (5) devant être autorisé comporte une carte radio mobile (6), dans lequel le téléphone mobile (5) est configuré, lors de la présence d'une carte radio mobile (6), de manière à attendre une autorisation par l'appareil externe (1) dans le cas d'un événement de communication.

2. Procédé selon la revendication 1, **caractérisé en ce que** la communication en champ proche (7) s'effectue par RFID.

3. Procédé selon la revendication 1 ou 2, **caractérisé en ce qu'**une unité RFID passive (3) est prévue dans l'appareil externe (1) et **en ce qu'**une unité RFID active (4) est prévue dans le téléphone mobile (5) pour la communication en champ proche (7).

4. Procédé selon l'une quelconque des revendications précédentes, **caractérisé en ce que** l'appareil externe (1) forme un serveur et **en ce que** le téléphone mobile (5) forme un client lors de la communication en champ proche (7).

5. Procédé selon l'une quelconque des revendications précédentes, **caractérisé en ce qu'**une identification est associée au téléphone mobile (5), au moyen de laquelle celui-ci est identifié par l'appareil externe (1).

6. Procédé selon l'une quelconque des revendications précédentes, **caractérisé en ce que** la communication en champ proche (7) s'effectue d manière cryptée et/ou protégée par mot de passe.

7. Procédé selon l'une quelconque des revendications précédentes, **caractérisé en ce que** l'appareil externe (1) administre l'autorisation d'au moins deux téléphones mobiles (5) qui sont enregistrés sur l'appareil externe (1).

8. Procédé selon la revendication 7, **caractérisé en ce qu'**une vérification de l'autorisation du téléphone mobile (5) correspondant et **en ce qu'**une vérification des liaisons actives établies par le téléphone mobile enregistré (5) est effectuée lors d'une demande de communication d'un téléphone mobile (5) ou lors de la survenue d'un événement de communication.

9. Procédé selon la revendication 8, **caractérisé en ce que** l'établissement d'une liaison de communication (9) n'est effectuée que lorsqu'aucun téléphone mobile (5) enregistré n'entretient une liaison active lors de l'utilisation d'une seule carte radio mobile (10) dans l'appareil externe (1) ou lorsqu'une autre liaison active est possible dans le cas de plusieurs téléphones mobiles enregistrés (5) lors de l'utilisation de plusieurs cartes radio mobiles (10).

10. Système destiné à mettre en oeuvre le procédé selon l'une quelconque des revendications 1 à 9, comprenant au moins un téléphone mobile (5) destiné à effectuer une communication par l'intermédiaire d'un réseau radio mobile (8) avec une unité de communication en champ proche (4), et un appareil externe (1) comportant une unité de communication en champ proche (3) et une ou plusieurs carte(s) radio mobile(s) (10), dans lequel les unités de communication en champ proche (3, 4) du téléphone mobile (5) et de l'appareil externe (1) sont conçues pour transmettre et recevoir des données d'autorisation.

11. Système selon la revendication 10, **caractérisé en ce que** l'unité de communication en champ proche (3) de l'appareil externe (1) est une unité RFID passive et **en ce que** l'unité de communication en champ proche (4) du téléphone mobile (5) est une unité RFID active.
